# EUROPEAN PATENT APPLICATION

(11) **EP 4 751 802 A1**
(43) Date of publication of application: **03.06.2026**
(21) Application number: 24216545.4
(22) Date of filing: 29.11.2024
(51) Int. Cl.: B01J 4/00, B01J 8/00, B01J 8/18, C08F 2/34, C08F 10/00

(54) **AN ENERGY EFFICIENT METHOD FOR PRESSURE CONTROL OF A POLYOLEFIN GAS PHASE REACTOR, CONTROL SYSTEM, AND GAS PHASE REACTOR SYSTEM**

(71) Applicant: Borealis GmbH, 1020 Vienna (AT)
(72) Inventor: MARDANI, Saeed, 06850 Kullo (FI)
(74) Representative: TBK

(57) **Abstract**

A method for performing a pressure control in a gas phase reactor system, a control system for executing the method for performing the pressure control in the gas phase reactor system, and the gas phase reactor system are provided. The method comprises a second-valve adjustment step, in which an opening pressure of a second valve for discharging a discharge mixture from a gas phase reactor to a recovery area is adjusted to a value equal to or higher than an opening pressure of a first valve for the supply to the gas phase reactor. Thereby, the gas phase reactor can be operated in a pressure range between the first-valve opening pressure and the second-valve opening pressure, and a workload placed on the recovery area of the gas phase reactor system is decreased.

## Description

### Field

The present disclosure relates to a method for performing a pressure control in a gas phase reactor system, a control system for performing the pressure control, and a gas phase reactor system.

### Background

Polyolefins such as polyethylene (PE) and polypropylene (PP) are generally valued for their excellent chemical resistance and good workability and are widely used in the packaging industry, in the medical sector, and the food sector.

A gas phase reactor (GPR) may be used in the polyolefin production process. This involves the polymerization of an olefin reacting monomer with the aid of a catalyst in the gas phase reactor. In the gas phase reactor, components for the production of the polyolefins are moved through a fluidized bed of the gas phase reactor so as to create an upwards moving feed stream where the polymerization process takes place. At an appropriate timing, a mixture of gas and the polyolefin polymer product is withdrawn from the gas phase reactor and is discharged to a product purging area. There, by using one or multiple separation vessels, the gases are separated from the polyolefin polymer. The gases are partially returned to the gas phase reactor and partially sent to a recovery area. The polymer polyolefin is forwarded to post processing of the polymerization process.

EP 2 397 221 A1 discloses a gas phase reactor for catalytic production of polyolefins and a control mechanism for the agitation in the fluidized bed. In the gas phase reactor, operation parameters such as a flowrate of the withdrawal stream are detected to determine particle agglomerations, which might adhere to devices in the gas phase reactor and deteriorate its operational efficiency.

WO 2023 / 031 201 A1 discloses a gas phase polymerization assembly comprising a gas phase polymerization reactor having at least one inlet and at least one outlet, a circulation gas compression unit having an inlet and an outlet, whereby the inlet of the circulation gas compression unit is fluidly connected to the at least one outlet of the gas phase polymerization reactor by an unreacted gas line; a flush gas compression unit having an inlet and an outlet, wherein the inlet of the flush gas compression unit is fluidly connected to the outlet of the circulation gas compression unit by a pressurized unreacted gas line; a circulation line fluidly connecting the pressurized unreacted gas line with the at least one inlet of the gas phase polymerization reactor; a flush gas withdrawal line connected to the outlet of the flush gas compression unit.

WO 2021 / 115 908 A1 discloses a gas phase reactor that comprises a gas distribution plate arranged inside the gas phase reactor; a first outlet for continuously withdrawing a first product stream, the first outlet being arranged above the gas distribution plate; and a second outlet for continuously withdrawing a second product stream, the second outlet being arranged above the gas distribution plate. The system further comprises a first outlet tank in fluid communication with the first outlet via a first passage, wherein the first passage comprises a first valve means for controlling the flow of the first product stream in the first passage and wherein the first outlet tank is arranged to receive the first product stream and to concentrate the first product stream; a product receiver tank in fluid communication with the second outlet via a second passage, wherein the second passage comprises a second valve means for controlling the flow of the second product stream in the second passage, and wherein the product receiver tank is arranged to receive the second product stream; and a control means in communication with the first valve means and the second valve means and arranged to control the operation of the first valve means and the second valve means so that flow in only one of the first passage and the second passage is allowed at a time.

US 2015 / 0 175 721 A1 relates to a method for calculating a pressure drop in a gas phase reactor to prevent unplanned shutdowns of the reactor system due to the carryover of polymer fines in the reactor overhead system.

However, suboptimal operation conditions in the gas phase reactor may not only occur due to particle agglomerations. To maintain appropriate polymerization conditions in the gas phase reactor, it is equally important to maintain the pressure in the gas phase reactor at an appropriate level. This means mainly that the polymer product withdrawn from the gas phase reactor needs to be appropriately replaced by adding new and/or recovered components to the gas phase reactor. This can, in principle, be achieved by providing a set of pressure controllers for the supply and discharge valves in the gas phase reactor system.

However, in the conventional technology, there is a need for an optimized control of the supply and discharge valves in a gas phase reactor system in order to suitably control the supply and withdrawal of products and components and to operate the gas phase reactor in a desired pressure range.

Therefore, it is an object of the present invention to provide a method for performing a pressure control in a gas phase reactor system, a corresponding control system for performing the pressure control, and a corresponding gas phase reactor, which improve the energy efficiency, achieve cost savings, and increase the capacity in the production of polyolefins.

### Summary

The above object is solved by a method for performing a pressure control in a gas phase reactor system according to claim 1.

The method can be executed in a gas phase reactor system comprising a gas phase reactor for producing polyolefins using at least a catalyst, a reacting monomer, a feed, and hydrogen; at least one first valve; and at least one second valve.

The feed used for the production of the polyolefins may be a gas or a gas mixture and may be used as a fluidization medium in the gas phase reactor system. The feed may constitute a main component that passes through the valves, such as the first valve and the second valve of the gas phase reactor system. The feed may include at least the olefin monomer that is used for the polymerization. In the case of producing polypropylene (PP) as the polyolefin, the feed may include propylene as the monomer, ethylene or other olefins as comonomer, hydrogen as an agent to control molecular weight adjustment, and inert components such as propane or nitrogen to control solids concentration, or the like. In the case of producing polyethylene (PE) as the polyolefin, the feed may include ethylene as the monomer, comonomer such as 1-butene and 1-hexene. Propane is the diluent and hydrogen is used to control the PE molecular weight.

The at least one first valve has a first-valve opening pressure (also referred to as set point of the first valve) for supplying a substance including the feed to the gas phase reactor. The substance may include other components related to the production of polyolefins in addition to the feed. The at least one first valve may include a plurality of first valves that are disposed in parallel to each other. In that case, each instance of the plurality of first valves may supply a different component of the substance. The at least one first valve is operably connected to at least one pressure controller. The type of valve and the valve design is not limited to a particular type.

The at least one second valve has a second-valve opening pressure (also referred to as a set point of the second valve) for discharging a discharge mixture including at least a part of the substance from the gas phase reactor to a recovery area. The discharge mixture may include other components formed during the production of polyolefins in addition to the substance. The at least one second valve may include a plurality of second valves that are disposed in parallel to each other. In that case, each instance of the plurality of second valves may discharge a different part of the discharge mixture. The at least one second valve is operably connected to the at least one pressure controller. The type of valve and the valve design is not limited to a particular type.

The recovery area is an area where the discharge mixture discharged from the at least one second valve is post-processed, such as separated into constituent components. For example, the discharge mixture may be separated into hydrogen, ethylene, propane and/or a comonomer using distillation and/or other separation means (e.g. membrane separation, splitters, flash tanks, or the like).

According to the invention, the method for performing a pressure control in a gas phase reactor system comprises a second-valve adjustment step and an operation step. In the second-valve adjustment step, the second-valve opening pressure is adjusted to a value equal to or higher than the first-valve opening pressure. In the operation step, the gas phase reactor is operated in a pressure range between the first-valve opening pressure and the second-valve opening pressure. In the case where the second-valve opening pressure is equal to the first-valve opening pressure, the gas phase reactor is operated at that pressure. The operation step may be a polyolefin production step. The operation step may be executed after the second-valve adjustment step, such that the operation step runs with improved efficiency with the valves adjusted.

According to the invention, by adjusting the second-valve opening pressure to a value equal to or higher than the first-valve opening pressure, the discharge mixture is discharged from the gas phase reactor at a pressure that is equal to or a higher than a pressure, at which the feed is supplied to the gas phase reactor. That is, the supply of the feed and the discharge of the discharge mixture can be controlled in an appropriate relation to each other, and the pressure in the gas phase reactor can be accurately set according to a desired value. Thereby, the energy efficiency in the gas phase reactor system can be improved, cost savings can be achieved, and the capacity can be increased in the production of polyolefins. Decreasing the energy consumption can also decrease the costs for the operation of the plant.

In contrast, by adjusting the second-valve opening pressure to a value lower than the first-valve opening pressure, the second valve would discharge the discharge mixture with a comparatively high flowrate from the gas phase reactor, while the first valve would continue with the supply of the feed to the gas phase reactor. Consequently, a comparatively high flowrate of the discharge mixture would be supplied to the recovery area, and a workload placed on the recovery area would be disadvantageously high. Such an inefficient operation is effectively prevented by the present invention.

Particularly, in the above method, the first-valve adjustment step may be performed manually (e.g. by an operator manually setting the first-valve to an opening percentage, an opening degree or a specific flow rate) and the second-valve adjustment step may be performed automatically (e.g. by automatically adjusting the second-valve opening pressure to a value equal to or higher than the first-valve opening pressure, that is, by controlling the second valve automatically to open at a higher pressure comparing with the pressure of the first valve of the gas phase reactor), or vice versa.

Preferably, in the second-valve adjustment step, the second-valve opening pressure is adjusted to a value higher than the first-valve opening pressure by not more than 50 kPa, preferably not more than 20 kPa.

Accordingly, a pressure control zone between the first valve and the second valve (also referred to as a dead zone) can be established where the first valve completely closes the supply of the feed because the pressure in the gas phase reactor is above the first-valve opening pressure, but the second valve is still not activated to discharge the gas to the recovery area. Thereby, the pressure in the gas phase reactor can be set to be within the pressure control zone, while the flowrate of the discharge mixture that is discharged from the gas phase reactor to the recovery area can be significantly decreased. Thus, the workload placed on the recovery area where the discharge mixture is separated into constituent components can be significantly decreased. Accordingly, the recovery area is prevented from becoming the bottleneck of the polyolefin production process. Thereby, the energy efficiency can be further improved and the production capacity can be increased.

Specifically, by keeping the pressure control zone in a comparatively low range, such as 20 kPa, any pressure fluctuation that may occur in the gas phase reactor will not be noticeable.

Preferably, the method further comprises a first-valve adjustment step of adjusting the first-valve opening pressure in a pressure range between 1000 kPa and 3000 kPa. In that case, the second-valve adjustment step is performed after the first-valve adjustment step.

Accordingly, the first-valve opening pressure can be adjusted to a desired pressure value within said pressure range, while the second-valve opening pressure is adjusted in accordance thereto so as to be equal to or higher than the adjusted first-valve opening pressure. Thereby, the gas phase reactor can be operated at a desired pressure level to further improve the energy efficiency.

Preferably, the gas phase reactor system further comprises a startup valve having a startup valve opening pressure for supplying the substance to the gas phase reactor system during startup. In that case, the method further comprises a startup valve adjustment step, in which the startup valve opening pressure is adjusted in a pressure range lower than the first-valve opening pressure. The first-valve adjustment step is performed after the startup valve adjustment step. The startup valve may supply new components from the outside of the gas phase reactor system to the gas phase reactor.

Accordingly, during startup of the gas phase reactor system, the pressure can be adjusted by the dedicated startup valve and new components can be supplied to the gas phase reactor system, without placing additional burden onto the pressure control executed with the first valve and the second valve.

Preferably, the method further comprises a purging step of purging the discharge mixture discharged from the gas phase reactor. The purging step includes a polymer-gas separation step, a purge gas pressurizing step, a purge gas heat exchanging step, a liquid-gas separation step, a feedback step, and a recovery step. In the polymer-gas separation step, the discharge mixture is separated into a polymer and a discharge gas by means of a polymer-gas separator. The polymer-gas separator may be a conveying gas bag filter or the like. In the purge gas pressurizing step, the discharge gas is pressurized by means of a purge gas compressor. In the purge gas heat exchanging step, the discharge gas is subjected to a heat exchange by means of a purge gas heat exchanger so as to condense at least a part of the discharge gas. In the liquid-gas separation step, the discharge gas is separated into a recovery liquid (condensed gas) and a recovery gas by means of a liquid-gas separator. The liquid-gas separator may be a separation tank (flash tank) where some of the gas condenses. In the feedback step, the recovery gas separated in the liquid-gas separation step is fed back to the gas phase reactor by means of a feedback line. In the recovery step, the recovery liquid is discharged through the second valve to the recovery area.

Accordingly, the processing on the outlet side of the gas phase reactor system can be improved by executing the purging step, and the energy efficiency can be increased. Specifically, by performing the second-valve adjustment step in combination with performing the liquid-gas separation step and the feedback step, the flowrate of the discharged mixture is decreased, such that also the flowrate of the recovery liquid is significantly decreased (can be set to a low flowrate). Thus, by operating the recovery area on a low flow rate mode, the workload placed on the recovery area is reduced, and the recovery area is prevented from becoming the bottleneck of the polyolefin production process. Thereby, the energy efficiency can be further improved.

In the purging step, the polymer-gas separation step, the recovery gas pressurizing step, the recovery gas heat exchanging step, and the liquid-gas separation step do not necessarily have to be performed in the given order and may be modified. One or more of these step may be omitted, as appropriate.

Preferably, the gas phase reactor system further comprises an emergency valve having an emergency-valve opening pressure for venting at least a part of the discharge mixture from the inside of the gas phase reactor to an outside thereof. In that case, the method further comprises an emergency-valve adjustment step, in which the emergency-valve opening pressure is adjusted in a pressure range higher than the second-valve opening pressure.

Accordingly, the upper limit pressure can be adjusted by the separate emergency valve to increase safety, without placing additional burden onto the pressure control executed with the first valve and the second valve.

Preferably, the first-valve adjustment step and the second-valve adjustment step are performed by at least one pressure controller. The at least one pressure controller may be a single pressure controller, which performs pressure control of both the first valve and the second valve (both the first-valve adjustment step and the second-valve adjustment step). The at least one pressure controller may also include a separate pressure controller for each of the first valve and the second valve (each of the first-valve adjustment step and the second-valve adjustment step may be performed by a separate pressure controller).

Accordingly, the pressure control can be automated, while the number of pressure controllers in the gas phase reactor system can be selected flexibly according to demand.

Preferably, the method further comprises a recirculation step of recirculating a recirculation mixture discharged from the gas phase reactor through a recirculation area and re-supplying at least a part of the recirculation mixture to the gas phase reactor.

Accordingly, by performing the recirculation step, the components in the gas phase reactor can be kept in a moved state, particularly in the fluidized bed, without affecting the supply of the substance by the at least one first valve and the discharge of the discharge mixture by the at least one second valve. Thereby, the pressure control in the gas phase reactor system can be performed more robustly, and the energy efficiency can be improved easier.

Preferably, the recirculation step includes a solid-gas separation step, a recirculation gas pressurizing step, and a recirculation gas heat exchanging step. In the solid-gas separation step, the recirculation mixture is separated into discharge particles and a recirculation gas by means of a solid-gas separator. The solid-gas separator may be a filter, a cyclone separator, or the like. In the recirculation gas pressurizing step, the recirculation gas is pressurized by means of a recirculation gas compressor. In the recirculation gas heat exchanging step, the recirculation gas is subjected to a heat exchange by means of a recirculation gas heat exchanger.

Accordingly, the recirculation mixture can be treated and processed appropriately, such that the efficiency of the gas phase reactor is improved, without placing additional burden on the pressure control.

The above object is also solved by a control system according to claim 10, which comprises at least one pressure controller configured to execute the foregoing method for performing a pressure control in a gas phase reactor system.

The above object is also solved by a gas phase reactor system according to claim 11.

The gas phase reactor system comprises the gas phase reactor, the at least one first valve, the at least one second valve, and the at least one pressure controller. The at least one pressure controller is configured to adjust the second-valve opening pressure to a value equal to or higher than the first-valve opening pressure, thereby allowing operation of the gas phase reactor in a pressure range between the first-valve opening pressure and the second-valve opening pressure.

According to the invention, by configuring the at least one pressure controller to adjust the second-valve opening pressure to a value equal to or higher than the first-valve opening pressure, the discharge mixture can be discharged from the gas phase reactor at a pressure that is equal to or a higher than a pressure, at which the feed is supplied to the gas phase reactor. That is, the supply of the feed and the discharge of the discharge mixture can be controlled in an appropriate relation to each other, and the pressure in the gas phase reactor can be accurately set. Thereby, the energy efficiency can be improved, cost savings can be achieved, and the capacity can be increased in the production of polyolefins.

Further advantageous embodiments of the gas phase reactor system are disclosed in the dependent claims 12 to 15, which achieve the same effects as those obtained by the corresponding method.

### Brief description of drawings

The aspects of the disclosure may be best understood from the following detailed description taken in conjunction with the accompanying figures. The figures are schematic and simplified for clarity, and they just show details to improve the understanding of the claims, while other details are left out. The individual features of each aspect may each be combined with any or all features of the other aspects. These and other aspects, features and/or technical effect will be apparent from and elucidated with reference to the illustrations described hereinafter, in which:
Fig. 1 is a schematic view of a gas phase reactor system according to an embodiment;
Fig. 2 is a flowchart illustrating a method for performing a pressure control in a gas phase reactor system according to the embodiment; and
Fig. 3A to 3C are time charts showing a change in pressure and flowrate when executing the method for performing a pressure control in the gas phase reactor system according to the embodiment.

### Detailed description

The detailed description set forth below in connection with the appended drawings is intended as a description of various configurations. The detailed description includes specific details for the purpose of providing a thorough understanding of various concepts. However, it will be apparent to those skilled in the art that these concepts may be practised without these specific details.

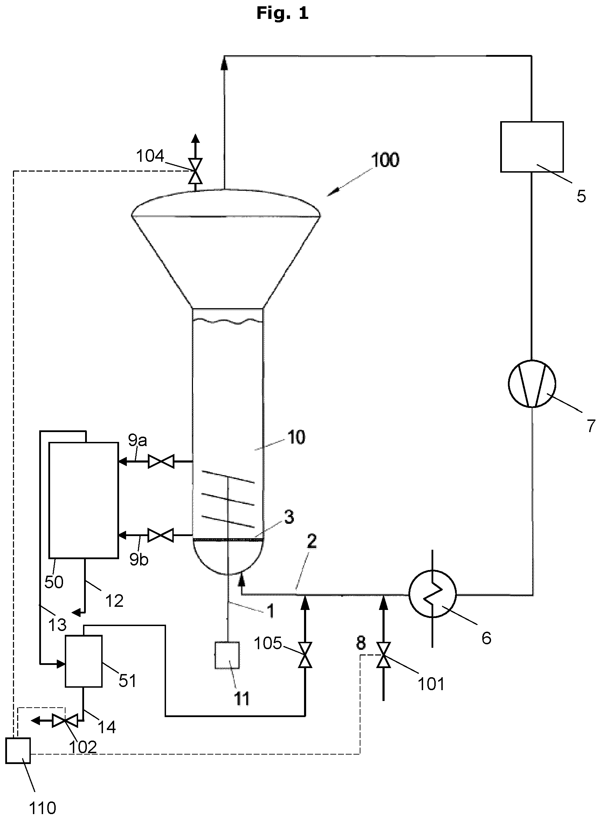

Fig. 1 is a schematic view of a gas phase reactor system according to an embodiment of the present invention. The gas phase reactor system comprises a gas phase reactor 100, a first valve 101, a second valve 102, a startup valve (not shown), an emergency valve 104, a purging area 50, 51, and a pressure controller 110.

First, the gas phase reactor 100 will be described. As shown in Fig. 1, the gas phase reactor 100 includes a fluidization grid 3 and a fluidized bed 10, which are supplied with a substance stream 2 in an upward direction. In the gas phase reactor 100, the olefin monomer is polymerized in the presence of a catalyst. The substance stream 2 is for cooling down the reactor and feeding (pressurizing) the gas phase reactor 100. Further, the gas phase reactor 100 includes an agitation device 1, such as a stirrer or mixer, to impart mechanical energy into the mixture of components in the gas phase reactor 100, and a driver 11 driving the agitation device 1. Further details relating to the polymerization operation performed in the gas phase reactor 100 are known by a person skilled in the art and omitted hereafter for the sake of brevity.

Next, an input side of the gas phase reactor 100 will be described. As shown in Fig. 1, the gas phase reactor 100 is supplied with the substance stream 2 in the upward direction. The substance stream 2 is constituted by at least the substance including the feed supplied by the first valve 101, and may additionally be constituted by the substance supplied by the startup valve, and a recirculation stream (recirculation gas) to be described later. The first valve 101 is operably connected to the pressure controller 110. Thereby, the pressure controller 110 controls the first valve 101 to adjust a supply amount (flowrate) of components for the production of polyolefins supplied into the gas phase reactor system by setting a first-valve opening pressure. Particularly, the first valve 101 controls the supply amount (flowrate) of the feed that includes at least the olefin monomer that is used for the polymerization process by adjusting the first-valve opening pressure.

In addition, the startup valve, which may be constituted by a plurality of valves, is provided so as to be capable of supplying the substance to the gas phase reactor during startup to raise the pressure from a minimum pressure to a minimum set point during the startup. The startup valve may be operably connected to the pressure controller 110. Thereby, the pressure controller 110 may control the startup valve to adjust a supply amount (flowrate) of components during the startup by setting a startup valve opening pressure.

Next, an output side of the gas phase reactor 100 will be described. On the output side, the gas phase reactor system further comprises at least a continuous outlet 9a. As shown in Fig. 1, in the present embodiment, the gas phase reactor system comprises a continuous outlet 9a and a batch outlet 9b. There may also be three outlets. The continuous outlet 9a is located substantially in the middle of the fluidized bed 10 with respect to a vertical direction and serves for withdrawing a discharge mixture including gas and solids from the gas phase reactor 100. In the present embodiment, the continuous outlet 9a is provided with a withdrawal valve to regulate a withdrawal amount through the continuous outlet 9a and batch outlet 9b. As shown in Fig. 1, the batch outlet 9b is located near the fluidization grid 3.

Next, the purging area 50, 51 of the gas phase reactor system will be described. Both the continuous outlet 9a and the batch outlet 9b connect the gas phase reactor 100 to the purging area 50, 51. The purging area 50, 51 includes a polymer-gas separator for separating the discharge mixture introduced from the outlets 9a, 9b into at least a polymer and a discharge gas. The separated polymer may be taken out from the gas phase reactor system and used as desired. As shown in Fig. 1, the purging area 50, 51 includes a polymer outlet 12, through which the separated polymer is taken out. In the present embodiment, the polymer-gas separator is a conveying gas bag filter which separates the gas from the polymer. The polymer-gas separator is connected to a purge gas compressor. The discharge gas output from the polymer-gas separator is introduced into the purge gas compressor where the discharge gas is pressurized. The purge gas compressor is connected to a purge gas heat exchanger where the discharge gas output from the purge gas compressor is subjected to a heat exchange so as to condense at least a part of the discharge gas (condensed gas). As shown in Fig. 1, the purging area 50, 51 further includes a fluid line 13, through which the discharge gas flows as a filtered-pressurized-cooled gas and liquid mixture. The two-phase discharge gas and liquid mixture is then introduced into a liquid-gas separator 51 where it is separated into a recovery liquid (condensed gas) and a recovery gas. In the present embodiment, the liquid-gas separator 51 is a separation tank (flash tank). On the output side, the liquid-gas separator 51 includes a liquid outlet 14, which is connected to the second valve 102 and through which the recovery liquid flows, and a feedback line, which is connected to a feedback valve 105 and through which the recovery gas is fed back to the gas phase reactor 100 using the recirculation gas to be described later. Under operation, the reactor pressure may continuously drop due to the fact that the reactants change to polymers. On the other hand, when there are transitions or poison, the pressure rises in the system, and in these times, the pressure is adjusted by the second valve 102.

The second valve 102 is operably connected to the pressure controller 110. Thereby, the pressure controller 110 controls the second valve 102 to adjust a discharge amount (flowrate) of the discharge mixture discharged from the gas phase reactor to the recovery area by setting a second-valve opening pressure based on a detection of the pressure in the gas phase reactor 100.

Further, as shown in Fig. 1, the emergency valve 104 is provided at the gas phase reactor 100. The emergency valve 104 is operably connected to the pressure controller 110. The emergency valve 104 is only activated if the pressure in the gas phase reactor 100 is abnormally high by setting an emergency-valve opening pressure. In this case, the emergency valve 104 releases the gases to flare to control the pressure for emergency cases where the pressure suddenly raises to a very high pressure.

Next, a recirculation area of the gas phase reactor system will be described. As shown in Fig. 1, the gas phase reactor system further comprises the recirculation area including a solid-gas separator 5, a recirculation gas compressor 7, and a recirculation gas heat exchanger 6. In the recirculation area, a recirculation mixture including gas and solids is removed from an upper part of the gas phase reactor 100 and introduced into the solid-gas separator 5. In the solid-gas separator 5, discharge particles such as polymer powders are separated from the recirculation mixture. In the present embodiment, the solid-gas separator 5 is a filter. After separating the discharge particles, the remaining gas (recirculation gas) is output from the solid-gas separator 5 and sucked into the recirculation gas compressor 7 where it is compressed. The recirculation gas compressor 7 is different from the purge gas compressor of the purging area 50, 51. The compressed recirculation gas is introduced into the recirculation gas heat exchanger 6 where it is cooled. Downstream of the recirculation gas heat exchanger 6, the recirculation gas (recirculation stream) is mixed with the substance supplied from the first valve 101 and the startup valve, as shown in Fig. 1. Then, the recirculation gas is re-supplied to the gas phase reactor 100 together with the substance supplied from the first valve 101 and the startup valve.

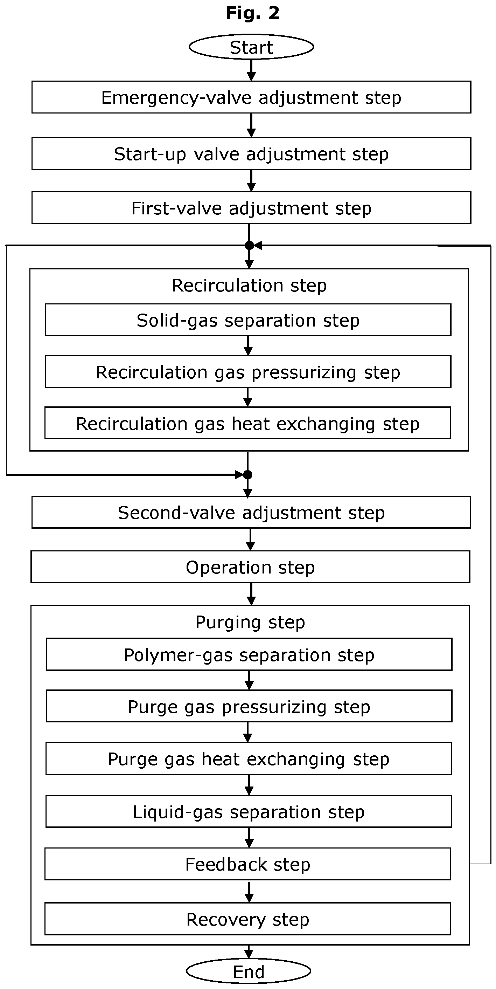

Next, a method for performing a pressure control in the gas phase reactor system will be described. Fig. 2 is a flowchart illustrating a method for performing the pressure control in a gas phase reactor system according to the embodiment.

Initially, an opening pressure (set point) of the emergency valve 104 is adjusted. Specifically, the opening pressure of the emergency valve 104 is set in a pressure range higher than the second-valve opening pressure of the second valve 102. In the present embodiment, the emergency-valve opening pressure is adjusted to a value of 2200 kPa or more. However, depending on the pressures in the system, the emergency-valve opening valve may generally be adjusted to a pressure of 200 kPa or more above the second-valve opening pressure.

Then, the startup valve, which may be constituted by a plurality of valves, is adjusted to raise the pressure from a minimum pressure to a minimum set point to supply the substance to the gas phase reactor system and initiate the startup. In the present embodiment, the startup valve opening pressure is adjusted in a range between 0 and 1000 kPa.

Then, after the startup of the gas phase reactor system, the first-valve adjustment step is performed by adjusting the first-valve opening pressure. The first valve 101 is considered the main valve to adjust the pressure in the gas phase reactor 100 to a reactor target pressure. The pressure in the gas phase reactor 100 is mainly adjusted by supplying the substance including the feed to the gas phase reactor 100. In addition to the reacting material, under normal operation conditions, a small flow of the diluent is needed to make the gas phase reactor 100 reach its target set point pressure. This diluent is supplied through the first valve to adjust the pressure. In the present embodiment, the first-valve opening pressure is adjusted in a range between 1000 and 3000 kPa.

As shown in Fig. 2, the second-valve adjustment step performed by adjusting the second-valve opening pressure may be executed directly after the first-valve adjustment step and/or at a later stage (e.g. after the recirculation step).

In the second-valve adjustment step, if the pressure in the gas phase reactor 100 becomes higher than the reactor set point pressure, the second valve 102 is opened to release some of the gases which leads the extra gas to the recovery area. In the present embodiment, the second-valve opening pressure is adjusted in a range between 2000 and 2100 kPa, preferably between 2000 and 2050 kPa, even more preferably in a range between 2000 and 2020 kPa. Although adjusting the second-valve opening pressure to a value only slightly above the first-valve opening pressure might cause a slight amount of pressure fluctuation in the operation of the gas phase reactor 100, it may be more efficient to run the process under such a condition.

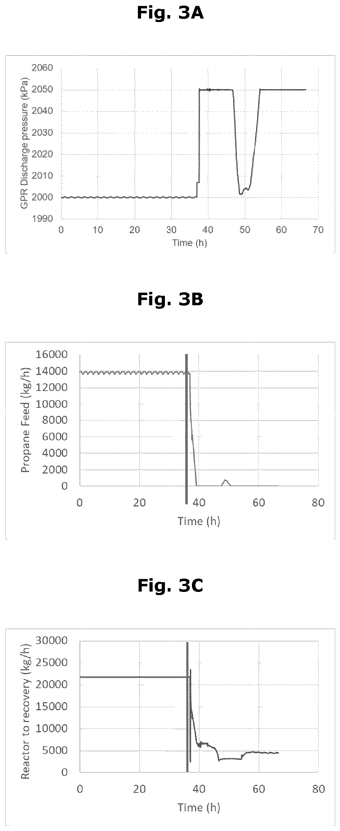

Further details of the second-valve adjustment step are described using Figs. 3A to 3C. Figs. 3A to 3C are time charts showing a change in pressure and mass flow when executing the method for performing a pressure control in the gas phase reactor system according to the embodiment.

Fig. 3A is a time chart showing a change in the second-valve opening pressure over time when performing the second-valve adjustment step. Initially, the second-valve opening pressure is set at 1950 kPa and maintained at that pressure level until a time of 35h after the start (0h). Throughout that time, the first-valve opening pressure is adjusted to 2000 kPa and maintained at that pressure level. Thus, until the time of 35h, the second-valve opening pressure is set at a value lower than the first-valve opening pressure. In this case, a comparatively high flowrate of the substance (feed) is needed to adjust the pressure in the gas phase reactor 100, and a continuous stream of gases is discharged to the recovery area. Fig. 3B shows the corresponding high flowrate of the substance (feed) supplied through the first valve 101 between 0h and 35h. Fig. 3C shows the corresponding high flowrate of the discharge mixture supplied through the second valve 102 between 0h and 35h.

As shown in Fig. 3A, at the time of 35h after the start, the second-valve opening pressure is adjusted to 2050 kPa, while the first-valve opening pressure is maintained at 2000 kPa. Thus, after the time of 35h, the second-valve opening pressure is set at a value higher than the first-valve opening pressure. Thereby, as shown in Fig. 3B, the flowrate of the substance (feed) supplied through the first valve 101 is significantly decreased, and, as shown in Fig. 3C, the flowrate of the discharge mixture supplied through the second valve 102 is significantly decreased. Thereby, the workload placed on the recovery area is significantly decreased.

The operation step is performed after the second-valve adjustment step. In the operation step, an energy-efficient production of polyolefins is performed in the gas phase reactor 100 where the flowrates both through the first valve 101 and the second valve 102 are significantly decreased. For the sake of completeness, it is noted that the operation step may also be performed before the second-valve adjustment step with a reduced energy efficiency.

Then, returning to Fig. 2, in the recirculation step, a solid-gas separation step, a recirculation gas pressurizing step, and a recirculation gas heat exchanging step are performed using the solid-gas separator 5, the recirculation gas compressor 7, and the recirculation gas heat exchanger 6.

In the purging step, which is performed in the purging area 50, 51, the discharge mixture discharged from the gas phase reactor 100 is purged. The purging step includes a polymer-gas separation step, a purge gas pressurizing step, a purge gas heat exchanging step, and a liquid-gas separation step. Finally, the purging step includes the feedback step where the recovery gas separated from the discharge mixture by the polymer-gas separation step and the liquid-gas separation step is fed back to the gas phase reactor 100 using the feedback valve 105, and the recovery step where the recovery liquid is discharged through the second valve 102 to the recovery area, thereby concluding the method according to the present embodiment.

The particular features, structures or characteristics described in the embodiment do not all have to be present in the gas phase reactor system and the method for performing a pressure control in a gas phase reactor system, and particular features may be omitted. The previous description is provided to enable any person skilled in the art to practice the various aspects described herein. Various modifications to the embodiment will be readily apparent to those skilled in the art, and the generic principles defined herein may be applied to other aspects.

## Claims

1. A method for performing a pressure control in a gas phase reactor system, the gas phase reactor system comprising:
a gas phase reactor (100) for producing polyolefins using at least a catalyst, a reacting monomer, a feed, and hydrogen;
at least one first valve (101 ) having a first-valve opening pressure for supplying a substance including the feed to the gas phase reactor (100); and
at least one second valve (102) having a second-valve opening pressure for discharging a discharge mixture including at least a part of the substance from the gas phase reactor (100) to a recovery area,
the method being **characterized by**:
a second-valve adjustment step of adjusting the second-valve opening pressure to a value equal to or higher than the first-valve opening pressure, and
an operation step of operating the gas phase reactor (100) in a pressure range between the first-valve opening pressure and the second-valve opening pressure.

2. The method according to claim 1, wherein
in the second-valve adjustment step, the second-valve opening pressure is adjusted to a value higher than the first-valve opening pressure by not more than 50 kPa, preferably not more than 20 kPa.

3. The method according to claim 1 or 2, further comprising:
a first-valve adjustment step of adjusting the first-valve opening pressure in a pressure range between 1000 kPa and 3000 kPa, wherein
the second-valve adjustment step is performed after the first-valve adjustment step.

4. The method according to claim 3, wherein the gas phase reactor system further comprises a startup valve having a startup valve opening pressure for supplying the substance to the gas phase reactor system during startup,
the method further comprising:
a startup valve adjustment step of adjusting the startup valve opening pressure in a pressure range lower than the first-valve opening pressure, wherein
the first-valve adjustment step is performed after the startup valve adjustment step.

5. The method according to any one of claims 1 to 4, further comprising:
a purging step of purging the discharge mixture discharged from the gas phase reactor (100), wherein the purging step includes:
a polymer-gas separation step of separating the discharge mixture into a polymer and a discharge gas by a polymer-gas separator;
a purge gas pressurizing step of pressurizing the discharge gas by a purge gas compressor;
a purge gas heat exchanging step of subjecting the discharge gas to a heat exchange by a purge gas heat exchanger so as to condense at least a part of the discharge gas;
a liquid-gas separation step of separating the discharge gas into a recovery liquid and a recovery gas by a liquid-gas separator (51);
a feedback step of feeding the recovery gas back to the gas phase reactor (100) by a feedback line through a feedback valve (105); and
a recovery step of discharging the recovery liquid through the second valve (102) to the recovery area.

6. The method according to any one of claims 1 to 5, wherein the gas phase reactor system further comprises an emergency valve (104) having an emergency-valve opening pressure for venting at least a part of the discharge mixture from the inside of the gas phase reactor (100) to an outside thereof,
the method further comprising:
an emergency-valve adjustment step of adjusting the emergency-valve opening pressure in a pressure range higher than the second-valve opening pressure.

7. The method according to any one of claims 1 to 6, wherein the first-valve adjustment step and the second-valve adjustment step are performed by at least one pressure controller (110).

8. The method according to any one of claims 1 to 7, further comprising:
a recirculation step of recirculating a recirculation mixture discharged from the gas phase reactor (100) through a recirculation area and re-supplying at least a part of the recirculation mixture to the gas phase reactor (100).

9. The method according to claim 8, wherein
the recirculation step includes:
a solid-gas separation step of separating the recirculation mixture into discharge particles and a recirculation gas by a solid-gas separator (5);
a recirculation gas pressurizing step of pressurizing the recirculation gas by a recirculation gas compressor (7); and
a recirculation gas heat exchanging step of subjecting the recirculation gas to a heat exchange by a recirculation gas heat exchanger (6).

10. A control system comprising at least one pressure controller (110) configured to execute the method for performing a pressure control in a gas phase reactor system according to any one of claims 1 to 9.

11. A gas phase reactor system, comprising:
a gas phase reactor (100) for producing polyolefins using at least a catalyst, a reacting monomer, a feed, and hydrogen;
at least one first valve (101) having a first-valve opening pressure for supplying a substance including the feed to the gas phase reactor (100); and
at least one second valve (102) having a second-valve opening pressure for discharging a discharge mixture including at least a part of the substance from the gas phase reactor (100) to a recovery area; **characterized by**
at least one pressure controller (110) configured to adjust the second-valve opening pressure to a value equal to or higher than the first-valve opening pressure, thereby allowing operation of the gas phase reactor (100) in a pressure range between the first-valve opening pressure and the second-valve opening pressure.

12. The gas phase reactor system according to claim 11, wherein the first-valve opening pressure is adjustable in a pressure range between 1000 and 3000 kPa by the at least one pressure controller (110), and
the second-valve opening pressure is adjusted to a pressure of not more than 50 kPa, preferably not more than 20 kPa, above the first-valve opening pressure by the at least one pressure controller (110).

13. The gas phase reactor system according to claim 11 or 12, wherein the gas phase reactor system further comprises:
a startup valve having a startup valve opening pressure for supplying the substance to the gas phase reactor system during startup; and
an emergency valve (104) having an emergency-valve opening pressure for venting at least a part of the discharge mixture from the inside of the gas phase reactor (100) to an outside thereof, wherein
the startup valve opening pressure is adjustable in a pressure range between 0 and 1000 kPa by the at least one pressure controller (110), and
the emergency-valve opening pressure is adjusted to a pressure of 200 kPa or more above the second-valve opening pressure by the at least one pressure controller (110).

14. The gas phase reactor system according to any one of claims 11 to 13, wherein the gas phase reactor system further comprises:
a purging area (50, 51); and
a recirculation area for recirculating a recirculation mixture discharged from the gas phase reactor (100) and re-supplying at least a part of the recirculation mixture to the inside of the gas phase reactor (100).

15. The gas phase reactor system according to claim 14, wherein
the purging area (50, 51) includes:
a polymer-gas separator for separating the discharge mixture into a polymer and a discharge gas;
a purge gas compressor for pressurizing the discharge gas;
a purge gas heat exchanger for subjecting the discharge gas to a heat exchange so as to condense at least a part of the discharge gas;
a liquid-gas separator for separating the discharge gas into a recovery liquid and a recovery gas;
a feedback line for feeding the recovery gas back to the gas phase reactor (100) through a feedback valve (105); and
a liquid outlet (14) for discharging the recovery liquid through the second valve (102) to the recovery area, and
the recirculation area includes:
a solid-gas separator (5) for separating the recirculation mixture into discharge particles and a recirculation gas;
a heat exchanger (6) for subjecting the recirculation gas to a heat exchange; and
a compressor (7) for pressurizing the recirculation gas.
